Europäisches Patentamt

(19) European Patent Office

Office européen des brevets

(11) Numéro de publication : **0 337 851 B1**

(12) # FASCICULE DE BREVET EUROPEEN

(45) Date de publication du fascicule du brevet :
23.10.91 Bulletin 91/43

(51) Int. Cl.⁵ : **F16N 39/06, B01D 35/14**

(21) Numéro de dépôt : **89400928.1**

(22) Date de dépôt : **05.04.89**

(54) Dispositif de filtration, notamment pour circuit de turbomachine.

(30) Priorité : **13.04.88 FR 8804861**

(43) Date de publication de la demande :
**18.10.89 Bulletin 89/42**

(45) Mention de la délivrance du brevet :
**23.10.91 Bulletin 91/43**

(84) Etats contractants désignés :
**DE FR GB**

(56) Documents cités :
**FR-A- 891 916**
**GB-A- 820 878**
**US-A- 2 425 700**
**US-A- 3 120 490**
**US-A- 4 512 299**

(73) Titulaire : **SOCIETE NATIONALE D'ETUDE ET DE CONSTRUCTION DE MOTEURS D'AVIATION, "S.N.E.C.M.A."**
**2, Boulevard du Général Martial Valin**
**F-75015 Paris (FR)**

(72) Inventeur : **Masclet, Dominique, Yves, Georges**
**67 bis, rue de Mesly**
**F-94000 - Creteil (FR)**

(74) Mandataire : **Moinat, François et al**
**S.N.E.C.M.A. Service des Brevets Boîte Postale 81**
**F-91003 Evry Cédex (FR)**

## Description

La présente invention concerne un dispositif de filtration, notamment adapté pour un circuit de lubrification d'une turbomachine.

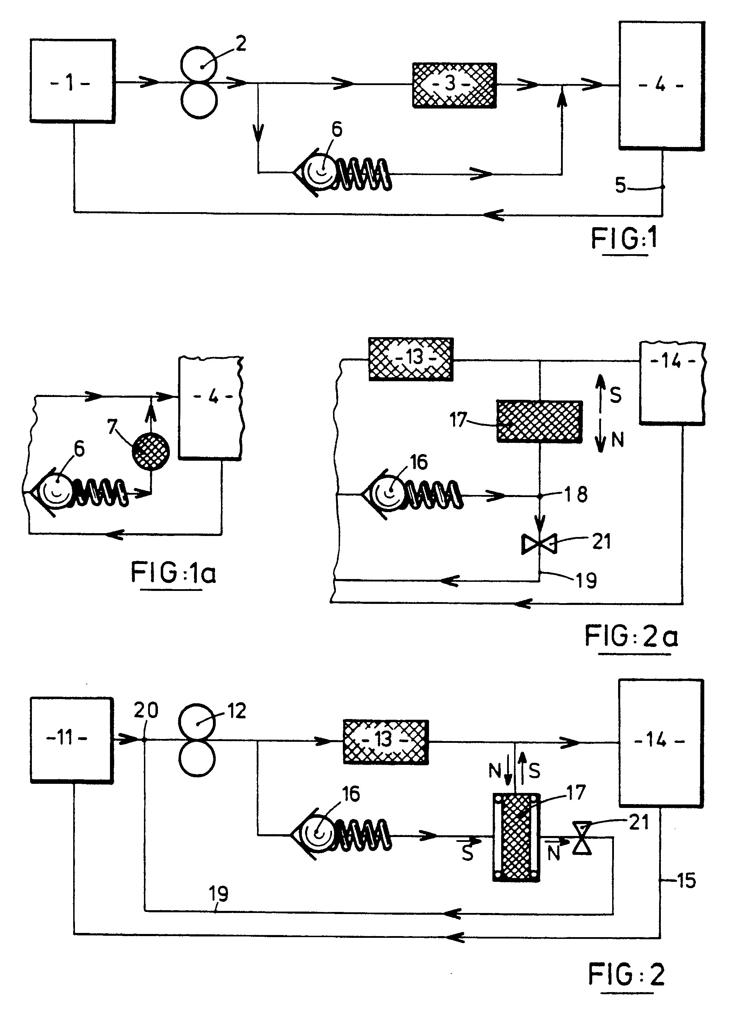

L'alimentation en fluide lubrifiant d'un circuit de lubrification de turbomachine se présente généralement suivant le schéma de principe représenté à la figure 1 qui comporte un dispositif de filtration d'un type connu. Le fluide lubrifiant est prélevé dans un réservoir 1 par une pompe 2, notamment de type volumétrique, puis traverse un filtre 3 avant d'être distribué vers les circuits utilisateurs 4 de la turbomachine. Un circuit de récupération et de retour 5 vers le réservoir 1 complète l'installation. Une interruption d'alimentation d'un tel circuit de lubrification pourrait avoir des conséquences catastrophiques, notamment dans les applications aéronautiques. Par suite, habituellement, un circuit de secours, comportant un clapet de dérivation 6, est monté en parallèle avec le filtre 3 (FR-A-891916). Ainsi, lorsque la perte de charge dudit filtre 3 résultant du colmatage occasionné par l'épuration du fluide lubrifiant pollué dans le filtre 3 dépasse un seuil déterminé, sous l'effet de la pression, le clapet de dérivation 6 s'ouvre et les circuits utilisateurs 4 continuent à être alimentés. Dans l'installation ainsi réalisée, le choix entre deux solutions doit être effectué. Soit, le dispositif de filtration est complété, comme représenté à la figure 1a, par un filtre de secours 7, monté en série avec le clapet de dérivation 6, ce qui induit également un colmatage du filtre de secours 7 chaque fois que le circuit d'alimentation en fluide lubrifiant est dérivé. Cette solution présente de nombreux inconvénients :

— notamment sur un moteur d'avion, la place disponible est extrêmement limitée pour placer les équipements et le besoin d'accessibilité à la fois aux deux filtres 3 et 7 est une exigence très coûteuse :

— en outre, les opérations de maintenance, du fait de la nécessité de remplacer ou nettoyer les deux filtres 3 et 7, se trouvent allongées en durée et compliquées ;

— enfin, un oubli de nettoyage ramène au problème précédent d'interruption catastrophique de la lubrification.

Soit, afin d'éviter ces inconvénients et notamment pour des raisons essentielles de sécurité, une deuxième solution consiste à ne pas adjoindre de filtre de secours 7 sur le circuit d'alimentation dérivé par le clapet de dérivation 6. Dans ce cas, par contre, les circuits utilisateurs 4 sont alimentés par un fluide lubrifiant pollué, ce qui présente également des inconvénients évidents.

L'invention réalise un dispositif de filtration qui répond aux différents problèmes rencontrés en évitant les inconvénients des solutions insatisfaisantes antérieurement connues et utilisées. Ledit dispositif de filtration est caractérisé en ce qu'il comporte un circuit complémentaire muni d'un étranglement, ledit circuit étant disposé entre un point situé en aval du clapet de dérivation, entre ledit clapet et le filtre de secours, et un point situé en amont de la pompe d'alimentation de telle sorte qu'en alimentation dérivée, le fluide lubrifiant traverse le clapet de dérivation puis le filtre de secours avant d'être distribué aux circuits utilisateurs et, en alimentation normale, une partie du fluide lubrifiant ayant traversé le filtre principal est dérivée à travers le filtre de secours et retourne à l'amont de la pompe d'alimentation, effectuant ainsi un nettoyage automatique à contre-courant du filtre de secours.

Le dispositif de filtration conforme à l'invention procure de nombreux avantages intéressants, et notamment par rapport aux solutions antérieures. Par ce moyen, les circuits utilisateurs sont toujours alimentés en fluide lubrifiant propre et filtré. Aucun colmatage permanent n'intervient sur le filtre de secours, ce qui simplifie et facilite la maintenance en dispensant de tout nettoyage ainsi que de toute surveillance particulière. Il s'ensuit que le filtre de secours peut être installé dans une zone peu accessible, en réduisant l'encombrement dans les meilleures conditions.

D'autres caractéristiques et avantages de l'invention seront mieux compris à la lecture de la description qui va suivre d'un mode de réalisation du dispositif de filtration conforme à l'invention, et en référence aux dessins annexés sur lesquels :

— la figure 1 précédemment décrite représente un schéma simplifié d'un circuit de lubrification comportant un dispositif de filtration d'un type antérieurement connu ;

— la figure 1a représente une variante du dispositif connu de la figure 1 ;

— la figure 2 représente un circuit de lubrification, selon une représentation schématique analogue à la figure 1, comportant un dispositif de filtration réalisé conformément à l'invention ;

— la figure 2a représente une variante du dispositif conforme à l'invention de la figure 2.

Sur la figure 2, le circuit de lubrification de turbomachine représenté comporte un réservoir 11, une pompe volumétrique 12, un filtre principal 13, des circuits utilisateurs symbolisés en 14, un circuit de récupération et de retour 15, un clapet de dérivation 16 monté en parallèle avec le filtre principal 13 et associé à un filtre de secours 17 monté en série avec le clapet. Conformément à l'invention, le filtre de secours 17 est raccordé par un circuit complémentaire 19 à un point 20 situé en amont de la pompe 12. Ledit circuit 19 comporte un étranglement calibré 21 de section modérée, de l'ordre de 2 mm par exemple. Comme représenté à la figure 2, ledit circuit 19 peut être raccordé directement sur le filtre de secours 17 ou selon une variante représentée à la figure 2a, ledit circuit 19 est raccordé en un point 18 situé en aval du clapet de dérivation 16 entre ledit clapet 16 et le filtre de secours 17.

Le fonctionnement du dispositif conforme à l'invention se déduit directement de la description qui vient d'être faite. En fonctionnement normal, le fluide lubrifiant prélevé dans le réservoir 11 par la pompe 12 est distribué à travers le filtre principal 13 vers les circuits utilisateurs 14 de la turbomachine, un fluide propre et filtré étant ainsi distribué en quantité suffisante. Lorsque le filtre principal 13 se colmate en fonctionnement et lorsque la perte de charge dudit filtre 13 dépasse un seuil déterminé, la pression créée à l'entrée du clapet de dérivation 16 provoque l'ouverture dudit clapet 16 et le fluide lubrifiant est distribué vers les circuits utilisateurs 14 par l'intermédiaire du circuit dérivé, à travers le filtre de secours 17 qui assure sa filtration. On note que le filtre de secours 17 est traversé dans ce cas dans le sens S allant du clapet 16 au circuit 14. De manière connue qui n'a pas besoin d'être décrite plus en détails, le colmatage du filtre principal 13 peut être signalé par une alarme afin que la prochaine intervention de maintenance prévoie le nettoyage du filtre principal 13. Lorsqu'à la suite de cette intervention, le fonctionnement normal reprend, une partie du fluide lubrifiant sortant propre et filtré du filtre principal 13 est dérivée et traverse le filtre de secours 17 à contre-courant vers le circuit complémentaire 19 et à travers l'étranglement 21, vers le point de raccordement 20, à l'amont de la pompe 12. Le filtre de secours 17 est ainsi traversé maintenant dans l'autre sens N, allant de l'aval du filtre principal 13 vers l'amont de la pompe 12, le clapet de dérivation 16 n'étant traversé par aucun courant de fluide. Durant cette phase, les impuretés et dépôts laissés dans le filtre de secours 17 pendant la phase de fonctionnement en secours par le fluide lubrifiant pollué sont entraînés par le fluide propre sortant du filtre principal 13 vers l'amont de la pompe 12, assurant ainsi un nettoyage automatique à contre-courant du filtre de secours 17 et le préparant à remplir à nouveau sa fonction de secours lorsqu'intervient, comme décrit ci-dessus, le colmatage du filtre principal 13 et l'entrée en service du clapet de dérivation 16.

Tous les éléments utilisés pour constituer le circuit de lubrification qui vient d'être décrit et notamment le dispositif de filtration qui y est intégré sont d'un type connu en soi et habituellement utilisés pour ce genre de construction ; les avantages procurés par l'invention et notamment par l'auto-nettoyage du filtre de secours sont dus au montage particulier de ces éléments que réalise l'invention.

## Revendications

1. Dispositif de filtration, notamment adapté pour un circuit de lubrification d'une turbomachine, comportant un réservoir (11), une pompe d'alimentation (12), un filtre principal (13), un clapet de dérivation (16) monté en parallèle avec ledit filtre principal (13) et associé à un filtre de secours (17) monté en série avec ledit clapet (16), alimentant des circuits utilisateurs (14), caractérisé en ce qu'il comporte en outre un circuit complémentaire (19) muni d'un étranglement (21), ledit circuit étant disposé entre un point (18) situé en aval du clapet de dérivation (16), entre ledit clapet (16) et le filtre de secours (17), et un point (20) situé en amont de ladite pompe (12) de telle sorte que, en alimentation dérivée, le fluide lubrifiant traverse ledit clapet de dérivation (16) puis le filtre de secours (17) avant d'être distribué aux circuits utilisateurs (14) et, en alimentation normale, une partie du fluide lubrifiant ayant traversé le filtre principal (13) est dérivée à travers ledit filtre de secours (17) et retourne à l'amont de la pompe d'alimentation (12), effectuant ainsi un nettoyage automatique à contre-courant du filtre de secours (17).

2. Dispositif de filtration selon la revendication 1 dans lequel ledit circuit complémentaire (19) est disposé directement entre le filtre de secours (17) et ledit point (20).

## Patentansprüche

1. Filtriereinrichtung, insbesondere für den Schmierkreis eines Strahltriebwerks, zum Speisen der Verbraucherkreise (14), mit einem Vorratsbehälter (11), einer Speisepumpe (12), einem Hauptfilter (13) und einem Abzweigventil (16), das parallel zu dem Hauptfilter (13) angeordnet und einem mit ihm in Reihe geschaltetes Hilfsfilter (19) zugeordnet ist, dadurch gekennzeichnet, daß weiterhin ein mit einer Drossel (21) ausgestatteter Zusatzkreis (19) vorgesehen ist, der zwischen einem stromabwärts des Abzweigventils (16) liegenden Punkt (18) zwischen Abzweigventil (16) und Hilfsfilter (17) und einem stromaufwärts der Speisepumpe (12) liegenden Punkt (20) so angeordnet ist, daß die Schmierflüssigkeit bei der Speisung über den Abzweig,kreis das Abzweigventil (16) und dann das Hilfsfilter (17) durchläuft, bevor sie an die Verbraucherkreise (14) verteilt wird, und bei normaler Speisung ein Teil der Schmierflüssigkeit nach Durchlauf durch das Hauptfilter (13) durch das Hilfsfilter (17) umgeleitet und zu der stromaufwärtigen Seite der Speisepumpe (12) zurückgeführt wird und so eine automatische Gegenstromreinigung des Hilfsfilters (17) bewirkt.

2. Filtriereinrichtung nach Anspruch 1, bei der der zusätzliche Kreis (19) direkt zwischen dem Hilfsfilter (17) und dem genannten Punkt (20) angeordnet ist.

## Claims

1. Filtering device, notably suited to the lubricating circuit of a turboshaft engine, comprising a tank (11), a feed pump (12), a main Filter (13), a bypass valve (16) fitted in parallel with the said main filter (13), and associated with an emergency filter (17) fitted in series with the said valve (16), feeding user circuits (14), characterised in that it comprises in addition a complementary circuit (19) fitted with a choke (21), the said circuit being placed between a point (18) situated downstream of the bypass valve (16), between the said valve (16) and the emergency filter (17), and a point (20) situated upstream of the said pump (12) in such a way that during bypassed supply conditions, the lubricating fluid passes through the said bypass valve (16) then the emergency filter (17) before being distributed to the user circuits (14) and, under normal supply conditions, a part of the lubricating fluid, having passed through the main filter (13) is diverted through the said emergency filter (17) and returns upstream of the feed pump (12), thus effecting an automatic counter-flow cleaning operation of the emergency filter (17).

2. Filtering device in accordance with Claim 1 in which the said complementary circuit (19) is placed directly between the emergency filter (17) and the said point (20).

FIG:1

FIG:1a

FIG:2a

FIG:2